# EUROPÄISCHE PATENTSCHRIFT

(11) **EP 1 143 176 B1**
(45) Veröffentlichungstag und Bekanntmachung des Hinweises auf die Patenterteilung: **24.01.2007**
(21) Anmeldenummer: 01105069.7
(22) Anmeldetag: 02.03.2001
(51) Int. Cl.: F16K 1/44

(54) **Absperrventil**
Shut-off valve
Soupape d'arrêt

(30) Priorität: 03.04.2000 CH 6392000
(43) Veröffentlichungstag der Anmeldung: 10.10.2001
(73) Patentinhaber: Siemens Schweiz AG, 8047 Zürich (CH)
(72) Erfinder: Neu, Kunibert, 73117 Wangen/Göppingen (DE)
(74) Vertreter: Weise, Wolfgang

(56) Entgegenhaltungen:
- DD-A- 278 391
- DE-A- 2 250 477
- FR-A- 2 365 742
- GB-A- 1 297 335
- JP-A- 11 072 166

## Beschreibung

Die vorliegende Erfindung betrifft ein Absperrventil nach dem Oberbegriff von Anspruch 1

Bekannt sind Doppelsitzventile beispielsweise aus der DE 31 46 590 und aus der EP 0 645 562. In der DE 31 46 590 werden Doppelsitzventile beschrieben, bei denen die lichten Innendurchmesser der Ventilsitze relativ stark unterschiedlich ausgelegt sind. Dadurch wird bei anstehendem Druck zwischen den Ventiltellern die öffnende Kraft des oberen, einen grösseren lichten Innendurchmesser aufweisenden, Ventiltellers grösser als die schliessende Kraft am unteren Ventilteller.

Speziell für den Einsatz als automatische Absperrventile für Gasbrenner und Gasgeräte legt die dafür gültige Norm in der DIN EN 161 Prüfkriterien für die Zulassung solcher Ventile fest, die bezüglich der Definition der Ventilklassen auf das Doppelsitzventil dadurch Rücksicht nimmt, dass es sich dann um ein Ventil der Klasse A, B oder C handelt, wenn durch das Wirken des Eingangsdruckes des Gases die Dichtkraft nicht verringert wird. Durch diese Definition entstehen Ventile gleicher Klasse mit unterschiedlichem Absperrverhalten gegenüber steigendem Eingangsdruck. Kann ein Tellerventil, beispielsweise der Klasse B, bis zum Versagen irgend eines an der Prüfung beteiligten Bauteils druckbeaufschlagt werden, wird bei normgerechten Doppelsitzventilen nach Überschreiten des dem Ventil eigenen maximalen Prüfdruck keine Dichtheit mehr abverlangt. Der Grund liegt darin, dass die Dichtkraft im wesentlichen von der Schliessfederkraft erzeugt wird und eine die Schliesskraft unterstützende Komponente aus einer möglichen Differenzfläche zwischen grossem und kleinem Sitzdurchmesser bei den bekannten Konstruktionen nicht in gleichem Masse in einen Sperrdruckanstieg auf beide Sitze umgesetzt werden kann. Hinzu kommt, dass die auf der Differenzfläche entstehende Kraft beim Öffnen des Ventils mit überwunden werden muss. Speziell bei Hubmagnetantrieben wird deshalb die Differenzfläche so klein wie nur möglich gehalten, was den Anteil der dynamischen Anpresskraft an der statischen Federvorspannung minimiert.

Ventile sind neben den rein statischen Druckbelastungen auch dynamischen Drücken ausgesetzt, die beim Schliessen der Ventile entstehen und besonders bei höheren Strömungsgeschwindigkeiten auftreten und das 1,5-fache des maximalen Betriebsdruckes übersteigen können. Höheren Eingangsdrücken wird ein Ventil auch dann ausgesetzt, wenn ein vorgeschalteter Hochdruckregler seinen eingestellten Ausgangsdruck überschreitet.

Der vorliegenden Erfindung liegt die Aufgabe zugrunde, ein Absperrventil der eingangs genannten Art anzugeben, welches einen Gasdurchtritt durch das Absperrventil bis zum angegebenen Berstdruck des Ventils wirksam verhindert.

Die genannte Aufgabe wird erfindungsgemäss durch die in den unabhängigen Ansprüche angegebenen Merkmale gelöst.

Kern der Erfindung ist es somit, dass eine definierte Differenzfläche als Wirkfläche für den Eingangsdruck geschaffen wird, die in sich geteilt aber gummielastisch und druckdicht verbunden den jeweiligen Dichtkraftanteil an den grossen bzw. kleinen Ventilsitzdurchmesser direkt bzw. indirekt überträgt, wobei die Schliessfederkräfte, die die Gegendruckprüfung nach DIN EN 161 erfüllen müssen, auf beide Sitze getrennt wirken und somit den anfänglichen Sperrdruck erzeugen.

Doppelsitzventile haben im Vergleich zu Einzeltellerventilen zwar den Nachteil mehr Einzelteile und höhere Fertigungsgenauigkeit zu beanspruchen, weisen aber bezüglich aufzubringender Öffnungsenergie und erforderlichem Ventilbauvolumen im Vergleich mit durchflussgleichen Einzeltellerventilen weniger Gewicht und geringerer Leistungsaufnahme gewichtige Vorteile auf, weshalb diese Ventilbauweise sich auch zukünftig behaupten wird. Der mittlere Sitzdurchmesser beim Dopelsitzventil beträgt nur 70 % des Sitzdurchmessers beim Einzelventil und auch der für die Optimierung von Magnetantrieben so wichtige Hub reduziert sich beim Doppeltellerventil ebenfalls auf 70 %.

Durch die der Bauweise des Doppeltellerventils zugrunde liegenden Kräfteausgleich aus den sich gegenüberliegenden druckbeaufschlagten Flächen reduziert sich gegenüber dem Einzelteller die für die Öffnungskraft relevante druckbelastete Fläche auf einen Kreisring als Differenz der grossen und kleinen Sitzfläche, wodurch sich insbesondere bei Ventilen mit höherem zulässigen Betriebsdruck und grösseren Nennweiten grosse Reduzierungen bei den Öffnungskräften ergeben.

Weitere vorteilhafte Ausgestaltungen der Erfindung ergeben sich aus den abhängigen Ansprüchen.

Einige bevorzugte Ausführungsbeispiele der erfindungsgemässen Vorrichtung bzw. des erfindungsgemässen Verfahrens werden anhand der nachfolgenden Zeichnungen näher erläutert.

Dabei zeigen:
- Fig. 1: die schematische Ansicht eines Absperrventils im Längsschnitt;
- Fig. 2: eine weitere Ausgestaltungsform des Doppeltellerstellgliedes mit einer Schliessfeder;
- Fig. 3: eine weitere Ausgestaltungsform des Doppeltellerstellgliedes mit einer veränderten Schliessfeder;
- Fig. 4: eine weitere vorteilhafte Ausgestaltungsform des Doppeltellerstellgliedes;
- Fig. 5: eine weitere vorteilhafte Ausgestaltungsform des grossen Tellers des Doppeltellerstellgliedes;
- Fig. 6: eine Teildraufsicht des Wippenringes aus Fig. 5;
- Fig. 7: eine weitere vorteilhafte Ausgestaltungsform des Doppeltellerstellgliedes;
- Fig. 8: eine weitere Ausgestaltung des Stellgliedes nach Fig. 7.

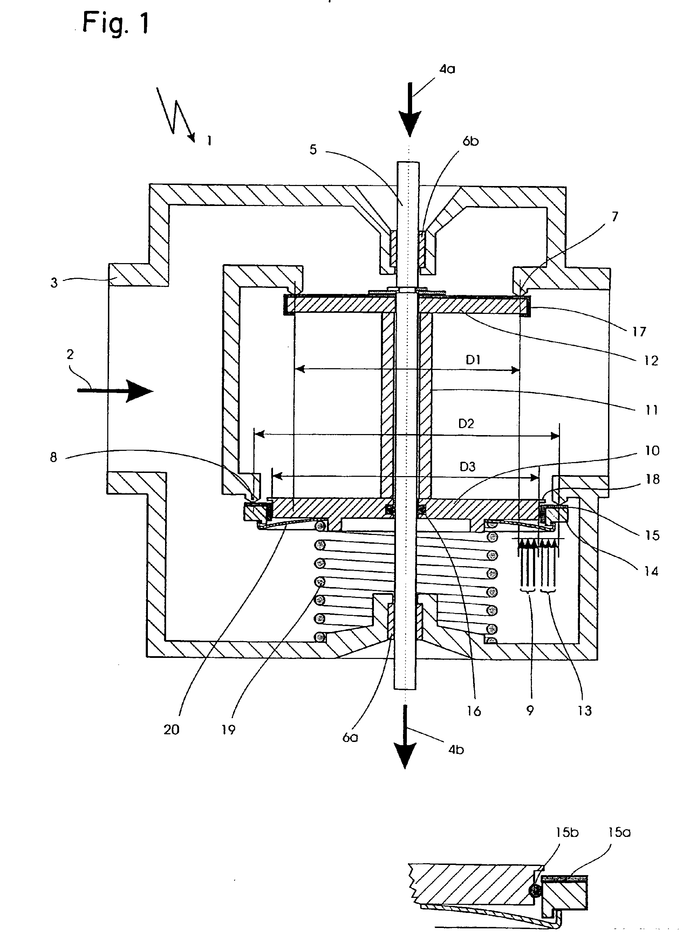

In Fig. 1 ist der Längsschnitt durch ein Absperrventil 1 dargestellt, das in der durch den Pfeil 2 angegebenen Richtungen durch ein abzudichtendes Medium durchströmt wird. Der Einfachheit halber wurde auf eine Unterteilung des Ventilgehäuses 3 in einzelne Bauteile verzichtet. Ebenfalls wurde auf die Darstellung der Hubantriebe zum Öffnen des Ventils verzichtet. Ersatzweise soll durch den Pfeil 4a die Anbauseite für einen stossenden bzw. drückenden Antrieb und durch Pfeil 4b die Anbauseite für den ziehenden Antrieb versinnbildlicht werden. Die Stange 5 wird durch zwei Buchsen 6a und 6b, die je nach Aktuatoraufbau auch mit einer Stangendichtung kombiniert sind, so geführt, dass eine radiale Bewegungsfreiheit des Stellgliedes selbst weitestgehend vermieden wird. Wahlweise kann das dem Antrieb abgewandte Stangenende auch in das Ventilgehäuse verlagert werden, so dass eine Stangendichtung nicht erforderlich wird.

Im Gehäuse sind die beiden Ventilsitze 7 und 8 konzentrisch und senkrecht zur Stangenachse bearbeitet, deren Abstand in der Regel werkzeuggebunden eine hohe Genauigkeit aufweist, die im Bereich von hundertstel Millimetern liegt. Trotz dieser Präzision im Sitzabstand und durch Kalibrieren des Abstandes der beiden Gummidichtflächen am Doppelstellglied ist es bei den bisherigen Doppeltellerstellgliedem nicht gelungen, die sich mit steigendem Eingangsdruck aufbauende dynamische Dichtkraft auf beide Ventilsitze aufzuteilen. Die Folge davon ist, dass ab einem bestimmten Druck einer der beiden Sitze beginnt, undicht zu werden.

Dies soll erfindungsgemäss durch den in Fig. 1 dargestellten Stellgliedaufbau dadurch vermieden werden, dass die durch den Eingangsdruck beaufschlagte und eine Schliesskraft ausbildende Kreisringfläche, gebildet aus dem Aussendurchmesser D2 und dem Innendurchmesser D1, durch den Durchmesser D3 in zwei Bereiche aufgeteilt wird. Der mit den Pfeilen 9 für die Eingangsdruckbelastung dargestellte innere Kreisring ist Teil des grossen Tellers 10, der über das Distanzrohr 11 kraftschlüssig mit dem kleinen Teller 12 verbunden ist, so dass eine eingangsdruckabhängige Sperrdruckausbildung am Ventilsitz 7 gegeben ist.

Die den Eingangsdruck auf den äusseren Kreisring, gebildet aus D2 und D3, charakterisierenden Pfeile 13 erzeugen die druckabhängigen Dichtkraft auf Ventilsitz 8. Die Kreisringfläche D2/D3 ist Teil des Tellerringes 14, der einerseits gegenüber dem Ventilsitz eine axiale und andererseits gegenüber dem grossen Teller 10 eine radiale Dichtfunktion am Durchmesser D3 erfüllt. Wie dargestellt trägt deshalb der Tellerring 14 ein Elastomer 15 als Dichtwerkstoff. Der grosse Teller 10 ist durch einen O-Ring 16 gegenüber der Stange 5 gegen Mediumsdurchtritt abgedichtet.

Der kleine Teller 12 trägt einen elastomeren Dichtwerkstoff 17, der gegenüber dem Ventilsitz 7 und der Stange 5 abdichtet.

Die axiale Lage des Tellerrings 14 zum grossen Teller 10 wird im wesentlichen bestimmt von den in Hubrichtung wirkenden Toleranzen der Bauteile 12, 17, 11 und zum geringsten von der Toleranz des Sitzabstandes im Gehäuse. Beim Öffnen des Stellgliedes nimmt die Schulter 18 am grossen Teller den Tellerring 14 einschliesslich der Dichtung 15 nach kurzem Vorlauf mit.

Entsprechend der o.a. Norm muss ein Ventil für Gasbrenner bei einer Gegendruckprüfung mit dem jeweiligen Druck innerhalb vorgegebener Leckraten bleiben. Diese Prüfdrücke liegen auf den gleichen Kreisringfläche an, nur auf der Ausgangsdruckseite des grossen Tellers 10 und des Tellerrings 14 an.

Eine Dichtwirkung bei dieser Gegendruckbeaufschlagung, die das Stellglied von den Sitzen abheben würde, ist nur erreichbar durch Aufbringung eines entsprechend hohen Sperrdruckes auf den Ventilsitzen. Dies wird dadurch erzielt, dass ein Kraftanteil der Schliessfeder 19 über den grossen Teller 10, das Distanzrohr auf den kleinen Teller 12 übertragen wird und der andere Kraftanteil über eine Tellerfeder 20 auf den Tellerring 14 übertragen wird.

Muss beispielsweise mit der Schliessfeder 19 ein Stossantrieb zurückgestellt werden, muss die Schliessfederkraft diese Rückstellenergie bereitstellen und demzufolge stärker ausgelegt sein als die Tellerfeder 20, die nur die Forderung der Gegendruckprüfung erfüllen muss.

Handelt es sich beim Antrieb um einen Hubmagneten, so reduziert sich die reine Druckkraftkomponente auf den Kreisring D2/D1 für einen maximalen Prüfdruck von 150 mbar.

Nach Wegnahme des Prüfdruckes erzeugen die nur nach den Forderungen der Gegendruckprüfung bestimmten Schliessfederkräfte einen definierten Sperrdruck auf den Ventilsitzflächen 7 und 8.

Wird dem Doppeltellerstellglied Eingangsdruck aufgeschaltet, so erhöht sich der durch die Schliessfedern erzeugte Sperrdruck um ein Mehrfaches des Eingangsdruckes. Dieser Verstärkungsfaktor wird gebildet durch das Verhältnis der jeweiligen Teilringfläche D2/D3 bzw. D3/D1 zur Auflagefläche des Dichtwerkstoffes auf den Ventilsitzen 7 und 8. Wird beispielsweise die Ventilsitzschneide b mit 0,5 mm Breite angenommen und die Breite der beiden Teilkreisringe mit 2 mm angesetzt, so ergibt sich ein Verstärkungsfaktor von rund 4. D.h. aus einem mbar Eingangsdruck werden 4 mbar Sperrdruck erzeugt, was dazu führt, dass ein derartiges Doppeltellerstellglied genau so wie ein Einzelteller mit zunehmendem Eingangsdruck immer dichter wird, bis eine Festigkeitsgrenze erreicht ist.

Im Gegensatz zum Einzeltellerventil, bei dem sich der Verstärkungsfaktor mit D/(4 b) errechnet, und die Ventilsitzbreite möglichst klein angesetzt wird, um die Schliessfederkraft zu minimieren, um die Magnetkraft zu minimieren, ist beim erfindungsgemässen Doppeltellerstellglied die Kreisringfläche wählbar ohne den freien Ventilquerschnitt zu verringern. Zum Vergleich: Für D = 50 mm und b = 0,5 mm, ergibt sich beim Einzeltellerventil ein Verstärkungsfaktor von 25. Bei hohen Eingangsdrücken führt dieser Verstärkungsfaktor aber auch zu hohen partiellen Belastungen für das Elastomer der Dichtung. Durch Anpassung der Kreisringfläche an die Druckhöhe, kann beim erfindungsgemässen Doppeltellerstellglied die maximale Pressung im Dichtwerkstoff in hohem Masse reduziert werden.

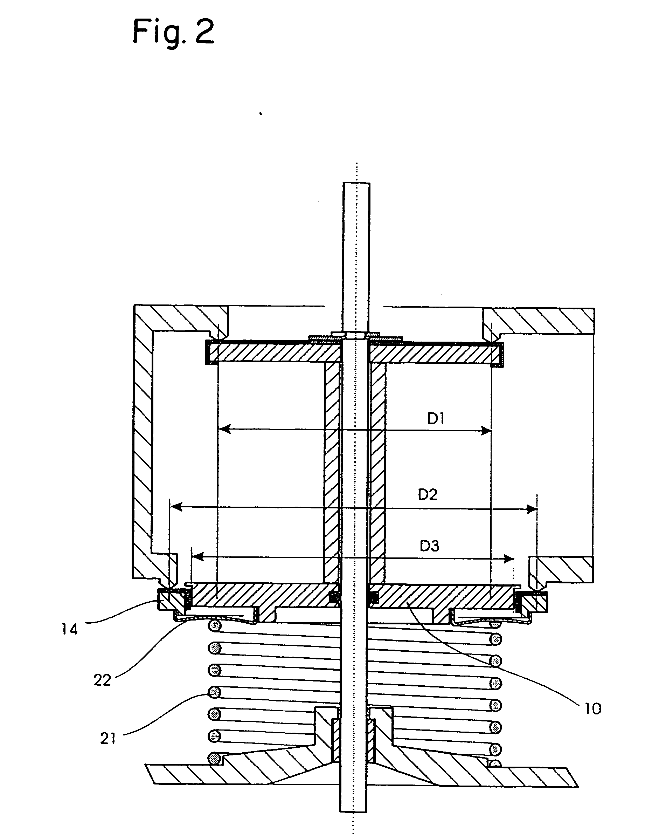

Fig. 2 zeigt eine andere Art der Kraftaufteilung, bei der nur die Schliessfeder 21 eingebaut ist, die ihre Kraft über eine Wippe 22 auf den grossen Teller 10 und den Tellerring 14 entweder zu gleichen Teilen oder in einem vorbestimmten Verhältnis überträgt.

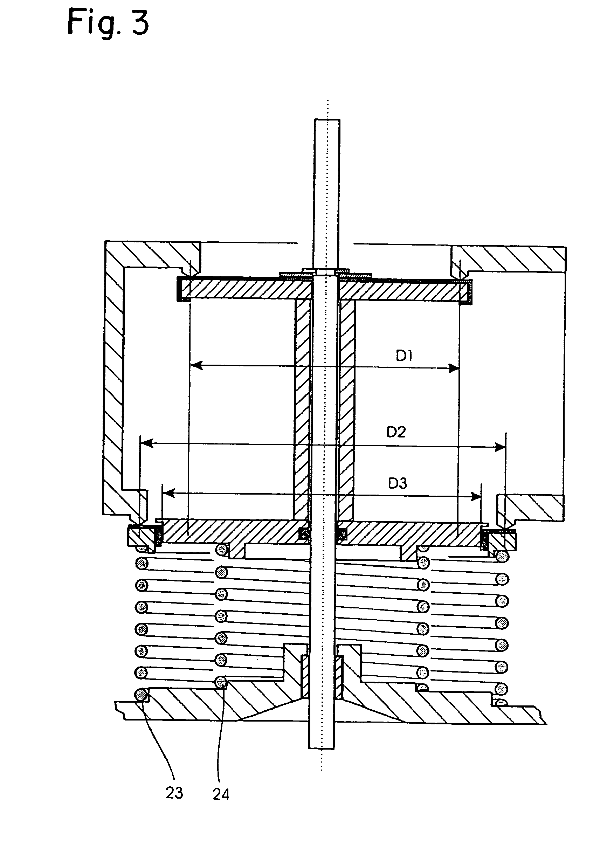

Fig. 3 zeigt eine weitere vorteilhafte Variante, die sich insbesondere durch eine einfache Auslegung und Anpassung der Federkräfte auszeichnet. Sowohl dem grossen Ventilsitz 7 über den Tellerring 14 als auch dem kleinen Ventilsitz 8 über den grossen Teller 10 können die der Ventilklasse zugeordneten Schliessfederkräfte getrennt zugeordnet werden. Durch den Einbau von zwei separaten Schliessfedern 23 und 24 entsteht ein zusätzlicher sicherheitsrelevanter Vorteil dieser Ausgestaltung des Doppeltellerstellgliedes.

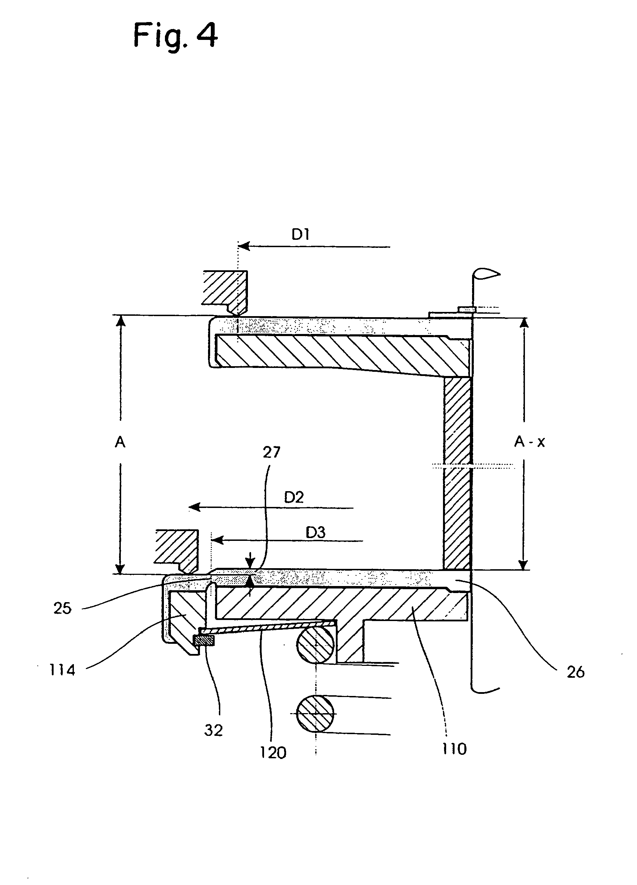

Fig. 4 zeigt eine vorteilhafte Ausführung des Doppeltellerstellgliedes durch die gummielastische Verbindung 25 des grossen Tellers 110 mit dem Tellerring 114, dadurch, dass der aufvulkanisierte Dichtwerkstoff 26 sowohl gegenüber dem Ventilsitz 7 und der Stange 5 abdichtet als auch eine dichte und toleranzausgleichende, bewegliche Verbindung zwischen dem Tellerring 114 und dem grossen Teller 110 herstellt. Die Tellerfeder 120, als plane Lochscheibe ausgebildet, wird durch die Schliessfeder gegen den grossen Teller gepresst und ist formschlüssig mit dem Tellerring verbunden und über einen Sicherungsring 32 axial gehalten, wodurch nach dem Abheben vom Ventilsitz 7 der Tellerring 114 eine immer gleiche Lage zum grossen Teller einnimmt. In Figur 4 ist die Geschlossenstellung des Stellgliedes dargestellt. Die vorgespannte Tellerfeder 120 erzeugt die erforderliche Anpressung des Dichtwerkstoffes im Bereich des Ventilsitzes, um die Forderungen der entsprechenden Gegendruckprüfung der Norm zu erfüllen. Der für den grossen Teller vorgesehene Überhub 27 berücksichtigt die eingangs beschriebene Toleranz der Einzelteile des Stellgliedes in Hubrichtung.

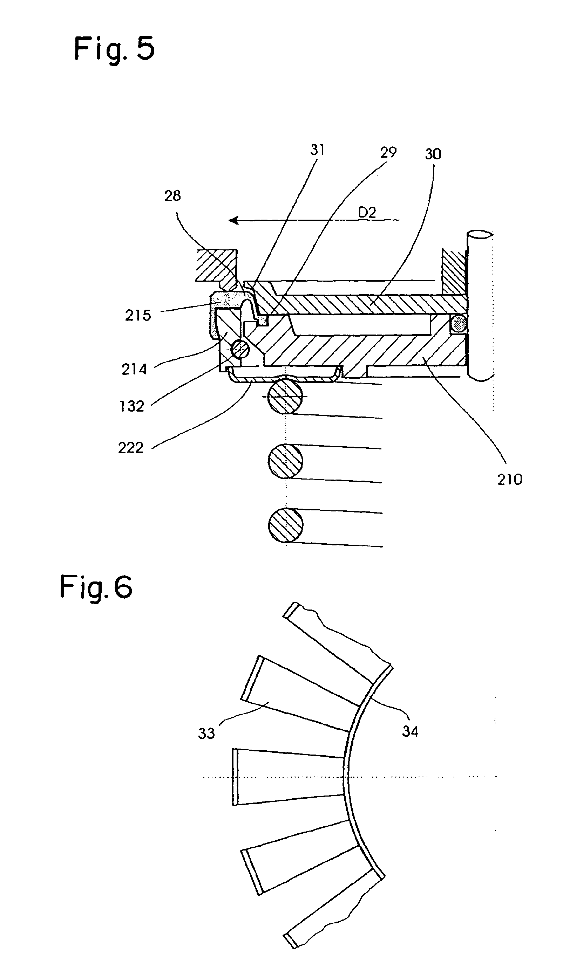

Fig. 5 zeigt eine weitere vorteilhafte Ausbildung des grossen Tellers und des Tellerrings dergestalt, dass nur mehr der Tellerring 214 den insbesondere aufvulkanisierten Dichtwerkstoff trägt, der radial nach innen zu einer Rollmembran 28 ausgeformt ist und über einen Dichtwulst 29, der durch den Deckel 30 vorgespannt ist, im grossen Teller 210 eingangsdruckseitig abgedichtet ist. Der Deckel 30 besitzt eine Aussenkontur 31, in die sich die Walkzone der Rollmembran bei hoher Druckbelastung abstützen kann, um eine Überbeanspruchung des Dichtungswerkstoffes auszuschliessen. Ein Sicherungsring 132 begrenzt den axialen Hub der Wippe 222 relativ zum grossen Teller im geöffneten Zustand und dient somit auch der Mitnahme beim Öffnen des Doppelstellgliedes. Der Tellerring besitzt beim Öffnen einen Nachlauf und beim Schliessen einen Vorlauf.

Fig. 6 zeigt eine Teildraufsicht des Wippenrings 22 bzw. 222. Es besteht aus einer Anzahl "Trägern auf zwei Stützen", die am Innendurchmesser 34 durch eine umlaufende Verbindung zusammengehalten werden. Durch die Aufteilung des in Wippensegmente 33 ist sichergestellt, dass sich der Tellerring 214 gegenüber dem grossen Teller leicht verkippen kann, ohne dass die gleichmässige Verteilung der Vorspannkraft verloren geht.

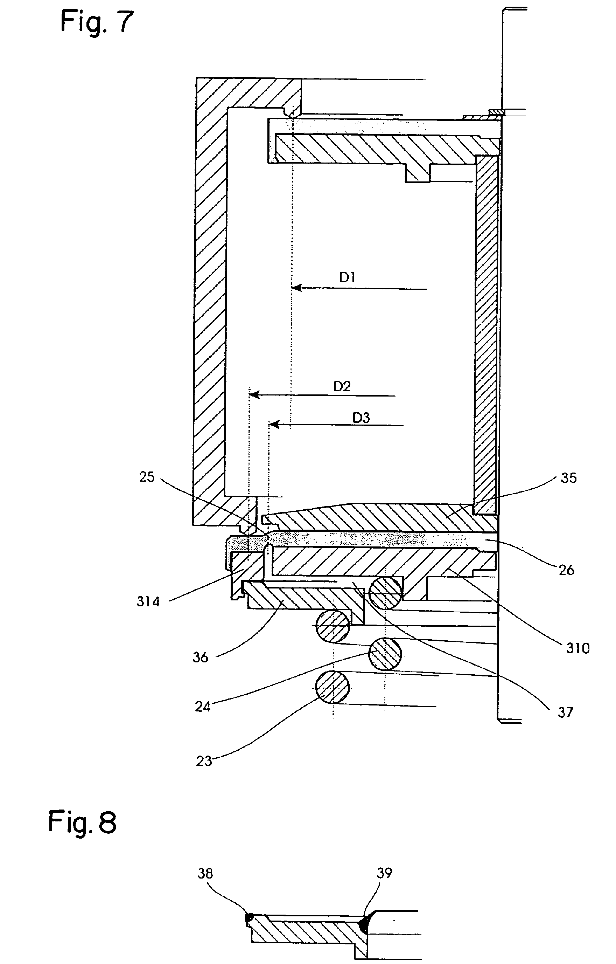

Fig. 7 zeigt eine weitere Ausgestaltung des Doppeltellerstellgliedes nach Fig. 3 und 4 insbesondere für höhere Eingangsdrücke durch Einbau der Scheibe 35, die eine Abstützung für die Walkzone 25 des Dichtwerkstoffes besitzt und gleichzeitig als Verteilerplatte für die Schliesskraft der Feder 24 gegenüber dem elastischen Dichtwerkstoff 26 dient, um die Verformung in Längsrichtung unter Eingangsdruckbelastung zu minimieren. Ein Federteller 36 überträgt die Schliessfederkraft auf den Tellerring 314 der formschlüssig, beispielsweise durch Umbördelung, mit dem Federteller verbunden ist. Dieser Formschluss nimmt den Tellerring beim Öffnen gegen den Eingangsdruck mit.

Fig. 8 zeigt eine sicherheitstechnische Weiterentwicklung des Stellgliedes nach Fig. 7. Da der Abstand 37 zwischen Federteller 36 und grossem Teller 310 wenige Zehntel Millimeter beträgt, kann der Federteller 36 aus Fig. 7 mit einer statischen Dichtung 38 und einer dynamisch wirkenden Dichtung 39 ausgestattet werden, die im Falle eines Walkzonenbruchs zur Wirkung kommen. Beide Dichtungen sind beispielsweise aufvulkanisiert und bestehen aus einem für Gase zulässigen Dichtwerkstoff.

Selbstverständlich ist die Erfindung nicht auf die gezeigten und beschriebenen Ausführungsbeispiele beschränkt.

## Patentansprüche

1. Absperrventil mit einem Doppelsitz mit einem oberen Ventilsitz (7) mit einem Durchmesser D1 und einem unteren Ventilsitz (8) mit einem Durchmesser D2, die einen unterschiedlichen Durchmessern aufweisen (D1 < D2) und einem Doppeltellerstellglied (12, 11, 10, 14), welches im geschlossenen Zustand einen Durchtritt eines abzudichtenden Mediums verhindert,
**dadurch gekennzeichnet,**
**dass** die durch das abzudichtende Medium beaufschlagte und eine Schliesskraft ausbildende Kreisringfläche (D2 - D1)des Doppeltellerstellgliedes (12, 11, 10, 14), gebildet aus dem Aussendurchmesser D2 und dem Innendurchmesser D1, durch einen Durchmesser D3 (D1 < D3 < D2) in zwei Bereiche (10, 14) aufgeteilt ist, die von einem den unteren Ventilsitz (8) schliessenden zweiteiligen Teller (10,14) des Doppelstellgliedes gebildet werden um die Schliesskraft auf den oberen (7) und den unteren Ventilsitz (8) aufzuteilen.

2. Absperrventil nach Anspruch 1,
**dadurch gekennzeichnet,**
**dass** der den unteren Ventilsitz (8) schliessende zweiteilige Teller des Doppeltellerstellgliedes (12, 11, 10, 14) aus einem inneren Teller (10) und einem den inneren Teller umschliessenden Tellerring (14) besteht, um die auf den inneren Teller (10) wirkende Teil-Schliesskraft (9) auf den oberen Ventilsitz (7) und die auf den Tellerring (14) wirkende Teil-Schliesskraft (13) auf den unteren Ventilsitz (8) zu übertragen.

3. Absperrventil nach Anspruch 1 oder 2,
**dadurch gekennzeichnet,**
**dass** ein Sperrdruck des Doppeltellerstellgliedes (12, 11, 10, 14) durch eine Schliesskraft (19, 21, 24), welche auf den ersten Bereich (10) des Doppeltellerstellglieds (12, 11, 10, 14) einwirkt, erzeugbar ist und dass über Mittel (20, 22, 23, 120, 222) auf den zweiten Bereich (14) ebenfalls eine Schliesskraft erzeugbar ist.

4. Absperrventil nach Anspruch 3,
**dadurch gekennzeichnet,**
**dass** die Schliesskraft des ersten Bereichs (10) durch eine Schliessfeder (19, 21, 24) erzeugbar ist.

5. Absperrventil nach Anspruch 3 oder 4,
**dadurch gekennzeichnet,**
**dass** die Mittel zur Erzeugung einer Schliesskraft (20, 22, 120, 222) mit der Schliesskraft des ersten Bereichs (10) zusammenwirken.

6. Absperrventil nach Anspruch 3 oder 4,
**dadurch gekennzeichnet,**
**dass** die Mittel zur Erzeugung einer Schliesskraft (23) eine Schliessfeder ist.

7. Absperrventil nach Anspruch 5,
**dadurch gekennzeichnet,**
**dass** die Schliesskraft des ersten Bereichs (10) über eine Tellerfeder (20, 120) oder eine Wippe (22, 222) auf den zweiten Bereich (14) übertragbar ist.

8. Absperrventil nach einem der vorhergehenden Ansprüche,
**dadurch gekennzeichnet,**
**dass** die zwei Bereiche (10, 14) mit einem gemeinsamen Dichtwerkstoff verbunden sind.

9. Absperrventil nach Anspruch 8,
**dadurch gekennzeichnet,**
**dass** die Walkzone zwischen den zwei Bereichen (10, 14) durch Mittel (31) abstützbar ist.

## Claims

1. Shut-off valve having a double seat comprising an upper valve seat (7) of diameter D1 and a lower valve seat (8) of diameter D2, said valve seats having different diameters (D1 < D2), and a double-disk actuating element (12, 11, 10, 14) which in the closed state prevents a flow of a medium which is be sealed off,
**characterised in that**
the annulus surface (D2 - D1) of the double-disk actuating element (12, 11, 10, 14), said surface being pressurised by the medium that is to be sealed off and producing a closing force, and being formed from the outside diameter D2 and the inside diameter D1, is divided into two regions (10, 14) which are formed from a two-part disk (10, 14) that is part of the double-disk actuating element and closes the lower valve seat (8), in order to distribute the closing pressure on the upper (7) and the lower valve seat (8).

2. Shut-off valve according to claim 1,
**characterised in that**
the two-part disk of the double-disk actuating element (12, 11, 10, 14), which two-part disk closes the lower valve seat (8), consists of an inner disk (10) and a disk ring (14) which surrounds the inner disk, in order to transmit the partial closing force (9) which acts on the inner disk (10) onto the upper valve seat (7) and to transmit the partial closing force (13) which acts on the disk ring (14) onto the lower valve seat (8).

3. Shut-off valve according to claim 1 or 2,
**characterised in that**
a shut-off pressure of the double-disk actuating element (12, 11, 10, 14) can be produced by a closing force (19, 21, 24) which acts on the first region (10) of the double-disk actuating element (12, 11, 10, 14), and that a closing force can likewise be produced on the second region (14) via means (20, 22, 23, 120, 222).

4. Shut-off valve according to claim 3,
**characterised in that**
the closing force of the first region (10) can be produced by a closing spring (19, 21, 24).

5. Shut-off valve according to claim 3 or 4,
**characterised in that**
the means for producing a closing force (20, 22, 120, 222) interact with the closing force of the first region (10).

6. Shut-off valve according to claim 3 or 4,
**characterised in that**
the means for producing a closing force (23) comprise a closing spring.

7. Shut-off valve according to claim 5,
**characterised in that**
the closing force of the first region (10) can be transmitted onto the second region (14) via a disk spring (20, 120) or a yoke (22, 222).

8. Shut-off valve according to one of the preceding claims,
**characterised in that**
the two regions (10, 14) are connected by means of a common sealing material.

9. Shut-off valve according to claim 8,
**characterised in that**
the flexing zone between the two regions (10, 14) can be supported by means (31).

## Revendications

1. Soupape d'arrêt avec un double siège avec un siège de soupape (7) supérieur avec un diamètre D1 et un siège de soupape (8) inférieur avec un diamètre D2, qui présentent un diamètre différent (D1 < D2) et un actionneur à double plateau (12, 11, 10, 14), qui empêche dans l'état fermé un passage d'un fluide à rendre étanche,
**caractérisée en ce que**
la surface de bague circulaire (D2-D1) alimentée par le fluide à rendre étanche et formant une force de fermeture, de l'actionneur à double plateau (12, 11, 10, 14), formée par le diamètre extérieur D2 et le diamètre intérieur D1, est subdivisée par un diamètre D3 (D1 < D3 < D2) en deux zones (10, 14), qui sont formées par un plateau (10, 14), fermant le siège de soupape (8) inférieur, de l'actionneur double, afin de répartir la force de fermeture entre le siège de soupape supérieur (7) et le siège de soupape inférieur (8).

2. Soupape d'arrêt selon la revendication 1,
**caractérisée en ce que**
le plateau en deux parties, fermant le siège de soupape (8) inférieur, de l'actionneur à double plateau (12, 11, 10, 14) comprend un plateau (10) intérieur et une bague à plateau (14) entourant le plateau intérieur, afin de transmettre la force de fermeture partielle (9) agissant sur le plateau (10) intérieur au siège de soupape (7) supérieur et la force de fermeture partielle (13) agissant sur la bague à plateau (14) sur le siège de soupape (8) inférieur.

3. Soupape d'arrêt selon la revendication 1 ou 2,
**caractérisée en ce que**
une pression de blocage de l'actionneur à double plateau (12, 11, 10, 14) peut être générée par une force de fermeture (19, 21, 24), qui agit sur la première zone (10) de l'actionneur à double plateau (12, 11, 10, 14) et **en ce que**, par des moyens (20, 22, 23, 120, 222), également une force de fermeture peut être générée sur la seconde zone (14).

4. Soupape d'arrêt selon la revendication 3,
**caractérisée en ce que**
la force de fermeture de la première zone (10) peut être générée par un ressort de fermeture (19, 21, 24).

5. Soupape d'arrêt selon la revendication 3 ou 4,
**caractérisée en ce que**
les moyens pour générer une force de fermeture (20, 22, 120, 222) coopèrent avec la force de fermeture de la première zone (10) .

6. Soupape d'arrêt selon la revendication 3 ou 4,
**caractérisée en ce que**
le moyen pour générer une force de fermeture (23) est un ressort de fermeture.

7. Soupape d'arrêt selon la revendication 5,
**caractérisée en ce que**
la force de fermeture de la première zone (10) peut être transmise au moyen d'un ressort à disque (20, 120) ou d'une bascule (22, 222) sur la seconde zone (14).

8. Soupape d'arrêt selon l'une quelconque des revendications précédentes,
**caractérisée en ce que**
les deux zones (10, 14) sont reliées à un matériau d'étanchéité commun.

9. Soupape d'arrêt selon la revendication 8,
**caractérisée en ce que**
la zone de flexion peut être soutenue entre les deux zones (10, 14) par des moyens (31).
